# EUROPÄISCHE PATENTANMELDUNG

(11) **EP 1 001 255 A2**
(43) Veröffentlichungstag der Anmeldung: **17.05.2000**
(21) Anmeldenummer: 99120363.9
(22) Anmeldetag: 13.10.1999
(51) Int. Cl.: G01F 23/296

(54) **Bauteil für eine Vorrichtung zur Feststellung eines vorbestimmten Füllstandes in einem Behälter**

(30) Priorität: 02.11.1998 DE 19850316
(71) Anmelder: Endress + Hauser GmbH + Co., 79689 Maulburg (DE)
(72) Erfinder: Renk, Peter, 79539 Lörrach (DE)
(74) Vertreter: Andres, Angelika

(57) **Zusammenfassung**

Es wird ein Bauteil, das, insbesondere an füllmedienberührenden Teilen, keine Schweißnähte aufweist und das kostengünstig hergestellt werden kann sowie ein Verfahren zu dessen Herstellung angeben. Das Bauteil weist ein Einschraubstück (1) mit einem Hohlraum (12), einem Außengewinde (11) und einem Endstück (13) auf. Des weiteren umfaßt das Bauteil eine Membran (21) und zwei auf der dem Hohlraum (12) abgewandten Seite der Membran (21) fixierte Schwingstäben (22, 23). Das Bauteil wird aus einem geraden stabförmigen Halbzeug durch spanabhebende Bearbeitungsverfahren gefertigt.

## Beschreibung

Die Erfindung betrifft ein Bauteil für eine Vorrichtung zur Feststellung eines vorbestimmten Füllstandes in einem Behälter sowie ein Verfahren zum Herstellen dieses Bauteils.

In der US-A 54 08 168 ist eine Vorrichtung zur Feststellung eines vorbestimmten Füllstands in einem Behälter beschrieben, die umfaßt:
- ein Einschraubstück mit einem Hohlraum,
- eine Membran,
- eine elektromechanische Wandleranordnung und
- ein Schwingelement mit zwei voneinander beabstandet auf einer dem Hohlraum abgewandten Membranseite befestigten Schwingstäben, wobei
- die Membran mit einem Rand an einer Stirnseite des Einschraubstücks fest gehalten ist und damit den Hohlraum abschließt und
- die Wandleranordnung im Hohlraum so untergebracht und mit einer dem Hohlraum zugewandten Membranseite so gekoppelt ist, daß sie einerseits die Membran im Betrieb in Schwingungen versetzt und andererseits von der Membran ausgeführte Schwingungen aufnimmt.

Die Vorrichtung wird in der dem vorbestimmten Füllstand entsprechenden Höhe am Behälter so angebracht, daß das Schwingelement in das Behälterinnere hineinragt und somit in das Füllgut eintaucht, wenn dieses den vorbestimmten Füllstand erreicht.

Zur Ermittlung des vorbestimmten Füllstandes wird das Schwingelement der Vorrichtung in Verbindung mit der Membran von der elektromechanischen Wandleranordnung in mechanische Schwingungen mit den Schwingungsparametern Schwingfrequenz und Schwingungsamplitude versetzt, wobei der Wert wenigstens eines der Schwingungsparameter von dem die Schwingstäbe umgebenden Medium, nämlich dem Füllmedium bzw. Luft, abhängig ist und somit dessen Änderung das Erreichen bzw. Unterschreiten des vorbestimmten Füllstands repräsentiert.

Die mechanische Schwingung ist üblicherweise eine selbsterregte Dauerschwingung, die durch Mitkopplung einer durch den Empfangswandler abgegebenen und verstärkten elektrischen Schwingung mit beliebiger Schwingfrequenz, z.B. der mit einer mechanischen Eigenfrequenz, auf den Erregerwandler realisiert wird. Das Mitkoppeln erfolgt durch eine geeignete Kompensation der einer bestimmten Schwingfrequenz, z.B der erwähnten mechanischen Eigenfrequenz, zugehörigen Phasenverschiebung zwischen der an den Erregerwandler angelegten und der durch den Empfangswandler abgegebenen elektrischen Schwingung mit dieser Schwingfrequenz.

Unter Ausnutzung der Abhängigkeiten der Schwingfrequenz der Dauerschwingung, die die Wandleranordnung, mit der Membran und dem Schwingelement im Betrieb ausführt, von dem das Schwingelement gerade umgebenden Medium kann ein vorbestimmter Füllstand dadurch festgestellt werden, daß die Vorrichtung in dessen Höhe an Behälter so angebracht ist, daß das Schwingelement in das Behälterinnere hineinragt, und diese Dauerschwingungen durch den Empfangswandler in ein elektrisches Wechselsignal gewandelt und einer Ansteuer- und Auswerteelektronik zugeführt werden und eine Änderung der Eigenfrequenz aufgrund der Änderung des das Schwingelement umgebenden Mediums z.B. beim Eintauchen des zuvor frei in Luft schwingenden Schwingelements in das Füllmedium, erfaßt und ausgewertet wird.

Der erwähnte Hohlraum des Einschraubstücks ist dafür vorgesehen, die elektromechanische Wandleranordnung aufzunehmen, die z.B. einen piezoelektrischen Erregungswandler und einen piezoelektrischen Empfangswandler umfaßt, die in geeigneter Weise, z.B. mittels eines Spannbolzens oder einer Klebeverbindung an der Membran befestigt ist. Die piezoelektrische Wandleranordnung kann auch ohne weiteres durch eine geeignete Tauchanker-Spulenanordnung ersetzt werden.

Die Schwingstäbe haben üblicherweise einen runden Querschnitt und spitzkegelig geformte freie Enden, an denen flache Paddel senkrecht zu der Ebene angebracht sind, in der die Schwingstäbe liegen und im Betrieb schwingen.

Nach der DE 196 21 449 A1 sind die Schwingstäbe und die Membran als ein einziges Feingußteil hergestellt, das nachträglich am Rand der Membran mit einem Einschraubstück verschweißt wird.

Nach einer bevorzugten Ausführung in US-A 54 08 168 sind die Schwingstäbe, die Paddel, das Einschraubstück und die Membran als einstückiges metallisches Formteil ausgeführt. Von der Patentinhaberin selbst wird dieses Formteil ebenfalls als verschweißtes Feingußteil hergestellt.

Schweißnähte sind Fügestellen, in deren unmittelbarem Bereich während des Fügevorganges Umbildungen im Kristallverband der verwendeten Legierung erfolgen, was zum einen die Festigkeit des Gefüges selbst und zum anderen die Spannungsverhältnisse im Bereich der Fügestelle verändert. Dies kann sich als nachteilig für die mechanische Dauerfestigkeit der Vorrichtung erweisen, so daß für die Gewährleistung einer ausreichenden Qualität der Fügestelle ein entsprechend hoher fertigungs- und auch prüftechnischer Aufwand erforderlich ist.

Solche einstückigen, geschweißten Feingußteile sind des weiteren an den Kanten und Oberflächen nachzubearbeiten, was wiederum die Fertigungskosten ungünstig beeinflußt. Außerdem sind bei solchen Feingußteilen, bedingt durch das Gießverfahren, bestimmte Mindestabmessungen festgelegt.

Aufgabe der Erfindung ist es, ein Bauteil für eine Vorrichtung zur Feststellung eines vorbestimmten Füllstandes in einem Behälter sowie ein Verfahren zu dessen Herstellung anzugeben, das, insb. an füllmedienberührenden Teilen, keine Fügestellen, wie z.B. Schweißnähte, aufweist und das kostengünstig hergestellt werden kann.

Zur Lösung der Aufgabe besteht die Erfindung in einem einstückigen, fügestellenfreien stabförmigen Bauteil für eine Vorrichtung zur Feststellung eines vorbestimmten Füllstandes in einem Behälter, das umfaßt:
- ein Trägermittel mit einem Hohlraum und
- ein Schwingelement mit
   - einer den Hohlraum abdeckenden Membran,
   - einem ersten Schwingstab und
   - einem zweiten Schwingstab,
   - wobei die Schwingstäbe auf einer vom Hohlraum abgewandten Seite der Membran voneinander beabstandet angeordnet sind.

Ferner besteht die Erfindung in einem Verfahren zum Herstellen eines einstückigen, fügestellenfreien stabförmigen Bauteils für eine Vorrichtung zur Feststellung eines vorbestimmten Füllstandes in einem Behälter, das umfaßt:
- ein Trägermittel mit einem Hohlraum und
- ein Schwingelement mit
   - einer den Hohlraum abdeckenden Membran,
   - einem ersten Schwingstab und
   - einem zweiten Schwingstab,
   - wobei die Schwingstäbe auf einer vom Hohlraum abgewandten Seite der Membran voneinander beabstandet angeordnet sind,
   welches Verfahren folgende Schritte umfaßt:
- ein erster Endabschnitt eines geraden stabförmigen Halbzeuges wird zu einem zylindrischen Ansatz geformt,
- in einen dem ersten Endabschnitt gegenüberliegenden zweiten Endabschnitt des Halbzeuges wird der Hohlraum erzeugt und
- in den ersten Endabschnitt wird eine Längsnut so eingebracht, daß die Schwingstäbe entstehen.

Nach einer ersten Ausgestaltung des Bauteils der Erfindung sind die Schwingstäbe wenigstens in einem endseitigen Abschnitt als gerade Kreissegment-Zylinder ausgebildet.

Nach einer zweiten Ausgestaltung des Bauteils der Erfindung sind die Schwingstäbe so auf der vom Hohlraum abgewandten Seite der Membran angeordnet, daß das Schwingelement eine zylinderförmige Außenkontur aufweist.

Nach einer dritten Ausgestaltung des Bauteils der Erfindung weisen die Schwingstäbe voneinander einen endseitigen Abstand auf, der mindestens gleich einem membranseitigen Abstand der Schwingstäbe ist.

Nach einer vierten Ausgestaltung des Bauteils der Erfindung ist das Trägermittel als ein Einschraubstück mit einem Außengewinde ausgebildet.

Nach einer ersten Ausgestaltung des Verfahrens der Erfindung wird in den ersten Endabschnitt eine Ringnut eingearbeitet.

Nach einer zweiten Ausgestaltung des Verfahrens der Erfindung ist das gerade stabförmige Halbzeug ein Rund-, ein Vier- oder ein Sechskantstab.

Nach einer dritten Ausgestaltung des Verfahrens der Erfindung besteht das gerade stabförmige Halbzeug aus Metall oder Kunststoff.

Ein Vorteil der Erfindung besteht darin, daß das Bauteil durch spanabhebende Bearbeitungsverfahren aus einem geraden stabförmigen Halbzeug kostengünstig hergestellt werden kann. Das so gefertigte Bauteil wird in seiner Länge und seinem Durchmesser im wesentlichen durch das Bearbeitungsverfahren bestimmt und kann im Vergleich zu den einstückigen Feingußteilen deutlich kleiner ausgeführt werden.

Durch die Verwendung von einfachen Halbzeugen zur Herstellung des Bauteils, die auch bei Massenfertigung eine geringe Streuung in den materialspezifischen Eigenschaften aufweisen, werden die schwingungsbeeinflussenden Parameter im wesentlichen nur durch die bearbeitungsbedingten Toleranzen bestimmt, die wiederum ohne großen technischen Mehraufwand in sehr engen Grenzen gehalten werden können.

Des weiteren vergrößert sich die Auswahl Metall-Legierungen und Kunststoffe, die für die Vorrichtung verwendbar sind. Für die Bearbeitung sind außerdem keine Spezialwerkzeuge notwendig, so daß eine weitere Optimierung der Vorrichtung ohne hohen fertigungstechnischen Mehraufwand erfolgen kann, was wiederum zu einer höheren Flexibilität der Fertigung führt. Aufgrund der einfachen Realisierung nahezu beliebig kleiner Durchmesser kann das Bauteil problemlos an die verschiedenen Standardmaße für Einschraubgewinde angepaßt werden.

Die Erfindung und weitere Vorteile werden nun anhand von Ausführungsbeispielen näher erläutert, die in den Figuren der Zeichnung dargestellt sind. Gleiche Teile sind in allen Figuren mit den selben Bezugszeichen versehen; wenn es die Übersichtlichkeit erfordert, wird auf bereits erwähnte Bezugszeichen in nachfolgenden Figuren verzichtet. Bereits beschriebene Einzelheiten werden in nachfolgenden Figuren nicht mehr erläutert.
- Fig. 1: zeigt schematisch das Bauteil in einer geschnittenen Seitenansicht
- Fig. 2: zeigt schematisch und teilweise im Schnitt das Bauteil in einer Endansicht

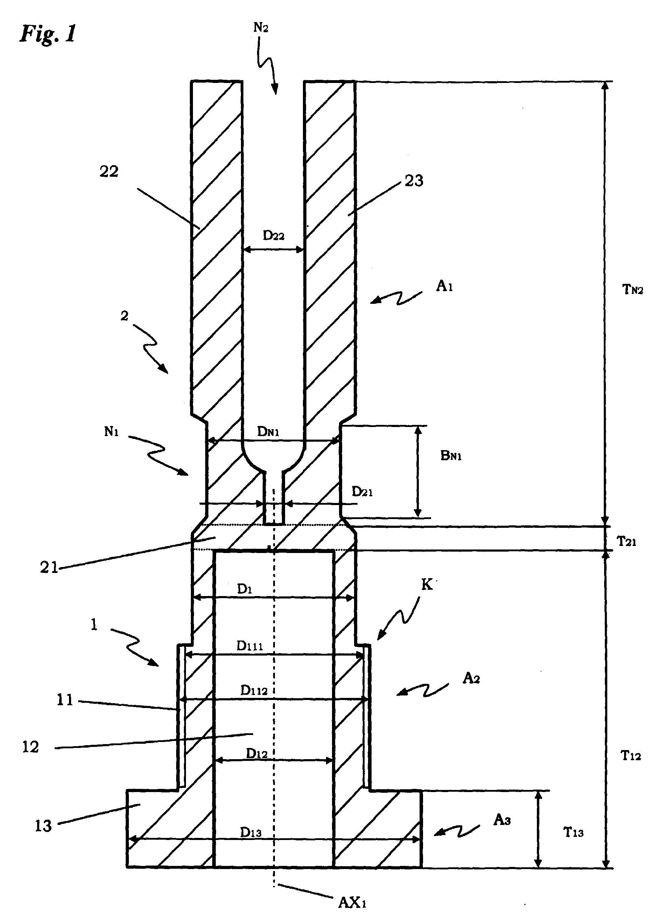

In Fig. 1 ist ein einstückiges gerades stabförmiges Bauteil für eine Vorrichtung zur Feststellung eines vorbestimmten Füllstandes in einem Behälter in einer geschnittenen Seitenansicht schematisch dargestellt.

Das Bauteil besteht aus Metall oder Kunststoff und umfaßt ein Trägermittel 1 mit einem Hohlraum 12 und ein Schwingelement 2 mit einer Membran 21, die den Hohlraum 12, insb. bündig, abdeckt, sowie mit einem ersten und mit einem zweiten Schwingstab 22, 23, welche beiden Schwingstäbe 22, 23 auf der Membran 21, und zwar auf einer dem Hohlraum abgewandten Seite der Membran 21, angeordnet und mit dieser starr verbunden sind.

Das Trägermittel 1 dient der Befestigung der Vorrichtung in einer Wand eines nicht dargestellten Behälters und ist im wesentlichen zylindrisch mit einer Längsachse AX₁ ausgebildet und weist ein von einem ersten Bauteil-Ende ausgehendes Endstück 13 mit einer Endstück-Dicke T₁₃ und einem Endstück-Durchmesser D₁₃ auf.

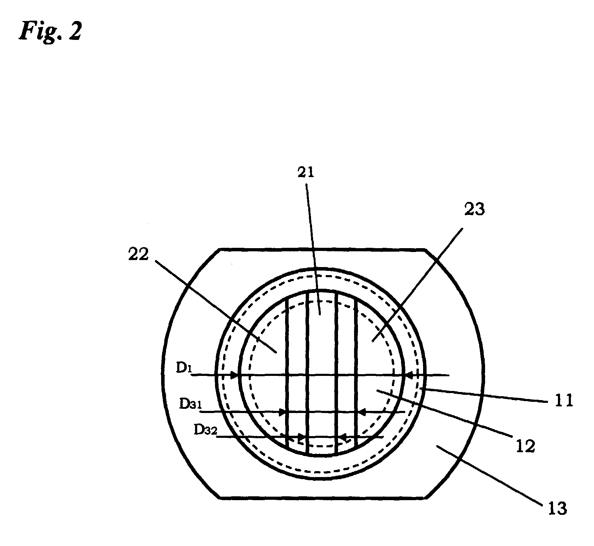

Nach einer bevorzugten Ausgestaltung der Erfindung ist das Trägermittel 1 als ein Einschraubstück ausgeführt. Das Trägermittel 1 weist dazu ein vom Endstück 13 ausgehendes Außengewinde 11 mit einer vorgebbaren Gewinde-Länge sowie mit einem Gewinde-Innendurchmesser D₁₁₁ und mit einem Gewinde-Außendurchmesser D₁₁₂ auf. Ein sich an das Außengewinde 11 anschließende, insb. zylindrische, Abschnitt des Trägermittels 1 weist dementsprechend einen größten Durchmesser D₁ auf, der höchstens gleich dem Gewinde-Innendurchmesser D₁₁₁ ist. Das Endstück 13 dient hierbei als Schraubenkopf und ist dafür in vorteilhafter Weise als Zweikant ausgebildet, vgl. Fig. 2. Es kann aber auch als Vier- oder Sechskant ausgebildet sein.

Der Hohlraum 12 im Trägermittel 1 ist bevorzugt zylindrisch mit einem Hohlraum-Durchmesser D₁₂ und einer Hohlraum-Tiefe T₁₂ rotationssymmetrisch bezüglich der Längsachse AX₁ ausgebildet und durchdringt das Trägermittel 1 vom ersten Bauteil-Ende her. Der Hohlraum-Durchmesser D₁₂ ist, insb. unter Berücksichtigung des Gewinde-Innendurchmessers D₁₁₁, so ausgelegt, daß das Trägermittel 1 mindestens eine Wanddicke von 1 mm aufweist.

Die Membran 21 des Schwingelements 2 ist eine flache Scheibe von vorgebbarer Membran-Dicke T₂₁. Die Membran 21 ist gemäß Fig. 1 vom ersten Bauteil-Ende in einem der Hohlraumtiefe T₁₂ entsprechenden Abstand mittels eines im wesentlichen ringförmigen Randbereich biegefest mit dem Trägermittel 1 so verbunden, daß sie den Hohlraum 12, insb. druckdicht, abschließt. Die Membran 21 ist dabei je nach für die Vorrichtung verwendetem Material in ihrer Membran-Dicke T₂₁ so ausgeführt, daß sie die zur Ermittlung des Füllstandes erforderlichen mechanischen Schwingungen bei vorgegebener Dauerfestigkeit ausführen kann. Die auf der dem Hohlraum 12 abgewandeten Seite der Membran 21 angeordneten Schwingstäbe 22, 23 weisen dabei einen endseitigen Schwingstab-Abstand D₂₂ und einen membranseitigen Schwingstab-Abstand D₂₁ voneinander auf, wobei der Schwingstab-Abstand D₂₁ höchstens gleich dem Schwingstab-Abstand D₂₂ ist. Für einen optimalen Betrieb der Vorrichtung sind die Schwingstäbe 22, 23 bei ausreichender Biegesteifigkeit des Schwingelements 2 voneinander bevorzugt maximal beabstandet.

Nach einer weiteren bevorzugten Ausgestaltung der Erfindung sind die Schwingstäbe 22, 23 gemäß Fig. 2 so geformt und auf der Membran 21 angeordnet, daß sie wenigstens in einem von einem zweiten Bauteil-Ende ausgehenden endseitigen Abschnitt des Bauteils als gerade, im wesentlichen parallel zueinander verlaufende Kreissegment-Zylinder ausgebildet sind.

Nach einer weiteren bevorzugten Ausgestaltung der Erfindung weist das Schwingelement 2 zumindest im endseitigen Abschnitt des Bauteils eine zylindrische Außenkontur mit einem Durchmesser auf, der gleich dem Durchmesser D₁ ist; der Durchmesser kann, falls erforderlich, auch kleiner als der Durchmesser D₁ ausgeführt sein.

Bei der Fertigung des Bauteils nach den Fig. 1 und 2 wird von einem einzigen geraden stabförmigen, ein erstes und ein zweites Stabende aufweisenden Halbzeug, z.B. einem Rundstab mit einem Stab-Durchmesser, der mindestens gleich dem Endstück-Durchmesser D₁₃ ist, ausgegangen. Die endgültige Form des Bauteils wird daraus bevorzugt durch spanabhebende Bearbeitung erzeugt.

Ein erster Endabschnitt des Halbzeuges wird dazu, insb. durch Drehen, so umgeformt, daß ein, insb. zylindrischer, erster Ansatz A₁ mit einem größten Außendurchmesser, der dem Durchmesser D₁ entspricht, und mit einer Länge, die kleiner als eine Stab-Länge des Halbzeuges ist, sowie ein sich an den Ansatz A₁ anschließender Absatz K entstehen.

Nach einer bevorzugten Ausgestaltung der Erfindung wird aus gehend von diesem Absatz K ein zylinderförmiger zweiter Ansatz A₂ mit einem Außendurchmesser, der dem Gewinde-Außendurchmessers D₁₁₂ entspricht, und mit einer Länge, die mindestens gleich der Gewinde-Länge des Außengewindes 11 ist, insb. durch Drehen, in das Halbzeug geformt, und zwar so, daß das an den Ansatz A₂ sich anschließend ein dritter Ansatz A₃ mit einer Länge verbleibt, die wenigstens gleich der Endstück-Dicke T₁₃ ist. Falls erforderlich, kann der Absatz K auch als eine Endkante des Endstückes 13 dienen und dementsprechend der Ansatz A₁ im ersten Endabschnitt erst nach Fertigung des Ansatzes A₂ gebildet werden.

Gemäß der Fig. 1 wird innerhalb des ersten Endabschnitts ferner eine Ringnut N₁ von vorgebbarem Ringnut-Durchmesser D_{N1} und von vorgebbarer Ringnut-Breite B_{N1} eingestochen, die dazu dient die Schwingfähigkeit des zu fertigenden Schwingelements 2 zu optimieren. Wie aus der Fig. 1 ohne weiteres ersichtlich, ist die Ringnut N₁ dabei so geformt, daß die geforderten Schwingstabstände D₂₂, D₂₁ realisierbar sind.

In den ersten Endabschnitt wird des weiteren eine, insb. zentrale, Längsnut N₂ mit einer Längsnut-Breite, die endseitig dem geforderten Schwingstab-Abstand D₂₂ und membranseitig dem geforderten Schwingstab-Abstand D₂₁ entspricht, insb. durch Fräsen, so eingebracht, daß die Schwingstäbe 22, 23 vollständig ausgebildet werden. Ferner weist die Längsnut N₂ eine Längsnut-Tiefe T_{N2} auf, die der Differenz zwischen der Stab-Länge des Halbzeuges und der Summe aus Hohlraum-Tiefe T₁₂ und geforderter Membran-Dicke T₂₁ entspricht.

In einem zweiten Endabschnitt des Halbzeuges wird ferner der Hohlraum 12 mit einer Hohlraum-Tiefe T₁₂ und einem Hohlraum-Durchmesser D₁₂, z.B. durch Fräsen, so erzeugt, daß der Hohlraum 12 praktisch bis in den ersten Endabschnitt dringt, und zwar so, daß, insb. im Bereich der Ringnut N₁, eine dem Hohlraum 12 zugewandte Seite der Membran 21 gebildet wird. Der Hohlraum-Durchmesser D₁₂ ist dabei so bemessen, daß entlang des Hohlraums 12 eine Wandung mit einer Mindestdicke von 1 mm verbleibt. Gegebenenfalls ist der Membran 21 auf deren dem Hohlraum 12 zugewandten Seite eine ringförmige Schulter angeformt, die der Abstützung der im Hohlraum 12 unterzubringenden elektromechanischen Wandleranordnung dient, vgl. US-A 54 08 168.

Anschließend sind in das Endstück 13 zueinander parallel verlaufende Schlüsselkanten einzufräsen, woraus sich zwanglos ergibt, das der Stabdurchmesser so groß zu wählen ist, daß die ausgearbeiteten Schlüsselkanten die erforderlichen Einschraubmomente aufnehmen können. Zum Schluß ist das Außengewinde 11 auf den zweiten Ansatz K einzuschneiden oder einzurollen.

Anstatt des Rundstabes kann bei der Fertigung des Bauteils ohne Weiteres auch von einem gleichseitigen Vier- bzw. einem Sechseckstab ausgegangen werden. Bei Verwendung eines solchen Vier- bzw. Sechseckstabes, mit einen Kantenabstand der einer genormten Schlüsselweite entspricht, kann auf das nachträgliche Aufbringen der Schlüsselkanten auf dem Endstück 13 verzichtet werden.

## Patentansprüche

1. Einstückiges, fügestellenfreies stabförmiges Bauteil für eine Vorrichtung zur Feststellung eines vorbestimmten Füllstandes in einem Behälter, das umfaßt:
- ein Trägermittel (1) mit einem Hohlraum (12) und
- ein Schwingelement (2) mit
- - einer den Hohlraum (12) abdeckenden Membran (21),
- - einem ersten Schwingstab (22) und
- - einem zweiten Schwingstab (23),
- - wobei die Schwingstäbe (22, 23) auf einer vom Hohlraum (12) abgewandten Seite der Membran (21) voneinander beabstandet angeordnet sind.

2. Bauteil nach Anspruch 1, bei dem die Schwingstäbe (22, 23) wenigstens in einem endseitigen Abschnitt als gerade Kreissegment-Zylinder ausgebildet sind

3. Bauteil nach Anspruch 1 oder 2, bei dem die Schwingstäbe (22, 23) so auf der Membran (21) angeordnet sind, daß das Schwingelement (2) eine zylinderförmige Außenkontur aufweist.

4. Bauteil nach einem der Ansprüche 1 bis 3, bei dem die Schwingstäbe (22, 23) voneinander einen endseitigen Abstand (D₂₂) aufweisen, der mindestens gleich einem membranseitig Abstand (D₂₁) der Schwingstäbe (22, 23) ist.

5. Bauteil nach einem der Ansprüche 1 bis 4, bei dem das Trägermittel (1) als ein Einschraubstück mit einem Außengewinde (11) ausgebildet ist.

6. Verfahren zum Herstellen eines einstückigen, fügestellenfreien stabförmigen Bauteils für eine Vorrichtung zur Feststellung eines vorbestimmten Füllstandes in einem Behälter, das umfaßt:
- ein Trägermittel (1) mit einem Hohlraum (12) und
- ein Schwingelement (2) mit
- - einer den Hohlraum (12) abdeckenden Membran (21),
- - einem ersten Schwingstab (22) und
- - einem zweiten Schwingstab (23),
- - wobei die Schwingstäbe (22, 23) auf einer vom Hohlraum (12) abgewandten Seite der Membran (21) voneinander beabstandet angeordnet sind,
welches Verfahren folgende Schritte umfaßt:
- ein erster Endabschnitt eines geraden stabförmigen Halbzeuges wird zu einem zylindrischen Ansatz (A₁) geformt,
- in einen dem ersten Endabschnitt gegenüberliegenden zweiten Endabschnitt des Halbzeuges wird der Hohlraum (12) erzeugt und
- in den ersten Endabschnitt wird eine Längsnut (N₂) so eingebracht, daß die Schwingstäbe (22, 23) entstehen.

7. Verfahren nach Anspruch 6, bei dem in den ersten Endabschnitt eine Ringnut (N₁) eingearbeitet wird.

8. Verfahren nach Anspruch 6 oder 7, bei dem das gerade stabförmige Halbzeug ein Rund-, ein Vier- oder ein Sechskantstab ist.

9. Verfahren nach einem der Ansprüche 6 bis 8, bei dem das gerade stabförmige Halbzeug aus Metall oder Kunststoff besteht.
